# EUROPEAN PATENT APPLICATION

(11) **EP 4 375 426 A1**
(43) Date of publication of application: **29.05.2024**
(21) Application number: 22209884.0
(22) Date of filing: 28.11.2022
(51) Int. Cl.: E02F 3/36, F15B 15/28, G01D 5/12

(54) **TOOL HOLDER FOR A MACHINE WITH A POSITIONING SYSTEM**

(71) Applicant: Oilquick AB, 824 12 Hudiksvall (SE)
(72) Inventor: Wigg, Jan, 824 79 Bjuråker (SE); Hallberg, Oskar, 824 93 Hudiksvall (SE)
(74) Representative: Groth & Co. KB

(57) **Abstract**

Disclosed herein is a tool holder (2) for a machine comprising
- a frame (8) comprising at least one hook-shaped cut-out (22) for receiving a first bracket pin (6) of a tool (1) and a least one partial cut-out (24) for receiving a second bracket pin (6) of the tool (1);
- an actuator (18) connected with one end to the frame (8), said actuator (18) comprising an actuator housing (30) arranged movable compared to the frame (8) upon activation of said actuator (18), the actuator housing (30) further comprising lock fingers (20) that are designed to change the shape of the at least one partial cut-out (24) so that second bracket pin (6) of the tool (1) can be locked in the tool holder and the at least one partial cut out (24), respectively;
- an actuator positioning system (10) comprising a pattern (14), a sweep sensor (16), a processor (32) and a computer readable memory (34), wherein
the sweep sensor (16) is arranged on the frame (8) and the pattern (14) is arranged on the actuator housing (30), whereby the pattern (14) is designed so that the sweep sensor (16) can detect the pattern (14) and generate a corresponding signal, which can be analysed using the processor (32) and the computer readable memory (34) for providing information relating to the actuator (18).

## Description

### Technical Field

The invention relates to the field of tool holders in particular tool holders for machines, such as excavators, foresting machines, building machines, cranes and so on. In another embodiment the invention relates to a method for determining information relating to an actuator of a coupling mechanism of such a tool holder.

### Background of the Invention

Tool holders are widely used in order to connect various tools such as shovels, hammers, vibrators, claw arms, cutters and so on to excavators, forestry machines or robotic machines. The tool holders are thereby adapted to fit onto standardized tool adapters typically comprising a pair of bracket pins, the tool adapters being rigidly connected to the tool. The tool holders typically comprise a hook shaped cut-out, which can engage one of the bracket pins and a partial cut out interacting with a locking element that is connected to an actuator whereby the other of the bracket pins can be arranged in said partial cut out and locked by extending the locking element via the actuator. This connection has proven to be useful and variations of it are widely used in the construction industry, the foresting industry and many other heavy industries. Problems that can arise relate to the issue that one of the two bracket pins is typically hidden from the operators view. Normally it is the one bracket pin configured to be secured by the locking element as the operator usually needs to see the hook shaped cut out in order to engage one of the bracket pins using the controls in the cabin. The other of the bracket pins can then be engaged by tipping the arm of the machine so that the other of the bracket pins engages in the partial cut out. During an optimal coupling operation the other of the bracket pins engages the partial cut out in a snug manner and the locking element then prevents the bracket pin from disengaging from the partial cut out. A correct locking can even be indicated in the cabin via displays or the like. There is however always a risk that in particular the rear bracket pin is not properly engaged and secured in the partial cut out and that such a situation goes by unnoticed by the operator, which can be hazardous for personnel and material in vicinity of the machine, since the tool can fall from the arm of the machine. Efforts have been made to improve the safety and to reduce the possibility of false couplings between the tool holder and the tool adapter and tool, respectively. Various technologies are disclosed in the prior art such as pressure sensors to determine hydraulic actuator positions and sensor - indicator combinations to determine at least one position of a rod. These technologies can be used but the risk of damage is rather high, since tool holders are normally operated in rough and tough environments. Further, in some cases these technologies are not reliable since only a limited number of specific positions can be detected.

In order to remedy some of the above drawbacks there are inductive sensors, which can provide information about the state of a coupling mechanism of a tool holder.

A system using an induction sensor for detecting the position of the piston is for example illustrated in DE 10 2010 060 550 A1. In this document two sensor units are used to detect two specific positions of the piston. When a head of the piston is passing the sensors a pulse is generated and via the pulse the position of the piston can be detected. In DE 10 2010 060 550 A1 each position needs to be assigned a sensor, thus if ones wants to detect more positions every position of the piston needs to be assigned a separate sensor. In addition, the position of the piston cannot be determined continuously.

Another system for determining the position using inductive measuring is shown in the EP 2846126 A1. In this document a system for detecting relative movement between two bodies is disclosed. EP 2846126 A1 illustrates two bodies whereby a first body is static and a second body is arranged movably on the first body. A pattern with magnetic marking is arranged on the second body and two inductive sensors sense the angle of the magnetic markings which is magnetically polarized S or N depending on the position. According to EP 2846126, two sensors are required to sense the position of the body. Crossings between S and N magnetizations of the pattern can be sensed via the sensors and thus determine the position. The idea behind EP 2846126 A1 is to use a gradient angle between neighbouring intersections of the markings to determine the position of the second body. The system illustrated in EP 2846126 A1 is however rather complicated requires more than one sensor and is also not robust to be applied in machines since the markings can be easily scratched off or otherwise compromised.

Considering the above a new way of detecting a current position of an actuator or a hydraulic cylinder was discovered using patterns that can be recognized by an sweep sensor.

### Summary of the Invention

An object of the present invention is to provide a tool holder that is robust, safe and versatile.

An additional object of the present invention is to provide a method for continuously determining the position and/or state of an actuator, for example a hydraulic or pneumatic cylinder.

The inventors of the present invention has discovered that it is possible to use a pattern and a sweep sensor to detect the current position and even change in position and/or acceleration of an actuator such as a hydraulic cylinder. The solution is highly versatile, very robust and economic. The positioning of the sensor and the pattern can be chosen so that they are protected from outer influences and abrasions. Further, the inventors have discovered that it is possible to mill the pattern into a housing of an actuator and to position the sensor on the housing or frame of the tool holder for optimal detection. Finally, the inventors realized that an irregular pattern makes the positioning system even more robust since a computer and software can detect the exact position of the actuator or cylinder even after an electronic reset.

Disclosed herein is a tool holder for a machine comprising:
- a frame comprising at least one hook-shaped cut-out for receiving a first bracket pin of a tool and a least one partial cut-out for receiving a second bracket pin of the tool;
- an actuator connected with one end to the frame, said actuator comprising an actuator housing arranged movable compared to the frame upon activation of said actuator, the actuator housing further comprising lock fingers that are designed to change the shape of the at least one partial cut-out so that second bracket pin of the tool can be locked in the tool holder and the at least one partial cut out respectively; and
- an actuator positioning system comprising a pattern, a sweep sensor, a processor and computer readable memory.

The sweep sensor can be arranged on the frame and the pattern can be arranged on the actuator housing, whereby the pattern is designed so that the sweep sensor can detect the pattern and generate a corresponding signal, which can be analysed by the processor for providing information relating to the actuator.
The above-described tool holder allows to use only one sweep sensor for detecting the exact position and/or parameters such as speed and/or acceleration of the lock fingers or lock element and thus the actuator. This leads to a tool holder that is very safe as the position of the lock finger can be determined exactly and unambiguously during operation of the tool holder.

In an embodiment more than one sweep sensor may however be employed for redundancy and safety reasons. These sweep sensors may be positioned at intervals above the pattern.

The tool holder may be a rotator, an adapter for various tools or a tilt rotator.

The sweep sensor may be arranged so that it faces away from an outer side of the frame. This may improve the protection of the sweep sensor and enhance durability.

The information may be information relating to the position of the actuator and/or the speed and acceleration at which the actuator is currently moving.

The sweep sensor and the processor may be configured to monitor the actuator continuously or at least during the use of the machine.

In another embodiment the sweep sensor may be an infrared sensor that senses the surface structure of the pattern via the wavelength of the infrared light, whereby the infrared sensor is working as detector (send and receive) of the infrared light pulses. Such a design requires that the actuator positioning system, in particular the infrared sensor and the pattern are isolated from the environment, for example via a housing.

In an embodiment the sweep sensor may be a capacitive sensor that can sense surfaces or the like depending on the electronic/static charge distribution on the surface; - similar to an adjustable capacitor in an electric circuit.

In a further embodiment the sweep sensor may be a resistive sensor comprising a mechanical arm or the like that follows the pattern during which the mechanical arm is affected by the pattern, which is recorded by a resistive element. The resistive element may thereby for example be a thin membrane which affected by a force that generates movement which results in different ohmic resistances.

In still a further embodiment the sweep sensor may be a ultrasonic sensor that sweeps the pattern with ultrasonic waves.

In a further embodiment the sweep sensor may be inductive sensor and the pattern may be made of a magnetizable material.

Using a capacitive sensor, an infrared sensor or a resistive sensor may have the advantage that the pattern does not need to be made of magnetizable material.

Using an inductive sensor and a pattern made of a magnetizable material may increase the robustness of the system towards dirt, dust and the like.

The term sweep sensor used herein may refer to any of the type of sensor that can sense or sweep across a surface and thereby detect the structure of that surface thus interpret the sensed information and provide a signal based on the information. The term sweep sensor includes at least all of the type of infrared sensor, capacitive sensor, resistive sensor, ultrasonic sensor and/or inductive sensor. The inductive sensor may be used with a pattern made of a magnetizable material.

In an embodiment a length of the pattern may correspond at least to a stroke length of the actuator so that the sweep sensor can continuously detect the pattern along the entire stroke length of the actuator.

The above means that the position of the actuator or the actuator housing can be continuously determined along the entire stroke length of the actuator.

In another embodiment the pattern may be an irregular pattern.

The pattern may comprise at least three sections, whereby each section is different from - and unique to the other sections. A first section relating to an open coupling mechanism, a second section relating to a transporting stretch of the coupling mechanism between open and closed coupling mechanism and a third section relating to the closed coupling mechanism.

The pattern may comprise at least four sections, whereby each section is different from - and unique to the other sections. The fourth section, besides the previous paragraph, relating to the coupling mechanism being in an over-extended state.

An irregular pattern improves the reliability of the actuator positioning system since it is possible to detect the exact actuator position or actuator housing position even after a reset or a power loss. An irregular pattern may further reduce or eliminate the need to calibrate the system prior to every new usage cycle or after a power loss or energy cut. An initial calibration may however still be needed.

Any number of sections may be used depending on the actual application of the actuator positioning system and the coupling mechanism.

In another embodiment the pattern may be produced by lasering, sputtering, milling, etching or 3D printing into or on a strip of magnetizable material and wherein the strip is fixedly connected to the actuator housing.

The strip may be bolted, screwed, clamped, magnetically connected or glued to the actuator housing. This may improve robustness of the system in case of standard change or in case of damage the strip of magnetizable material may simply be replaced.

In a further embodiment the actuator housing may be made of magnetizable material, and the pattern may be lasered, sputtered, milled, etched, 3D printed directly into or on the actuator housing.

This may increase robustness and reliability of the actuator positioning system.

In another embodiment the actuator may comprise at least one hydraulic cylinder or pneumatic cylinder.

The actuator may also be a paired cylinder of H-shape, whereby the actuator housing is H-shaped comprising two pistons that can extend and retract from both legs of the H-shape.

Disclosed herein is also a method for extracting information relating to the current state of an actuator and a coupling mechanism, respectively, in a tool holder. The method may comprise the steps of:
- Reading a pattern provided on an actuator via a sweep sensor;
- Generating a signal based on the pattern using the sweep sensor;
- Deriving a curve over time using the signal;
- Analysing the curve;
- Extracting information from the analysis of the curve; and
- Providing visual, haptic or acoustic signals to an operator to indicate the current state of the actuator of the tool holder.

The pattern may be continuously read by the sweep sensor.

The described method may improve the safety when operating a tool holder of machine, in particular during connecting and detaching tools. In general the described method may improve reliability of the tool holder.

The information that is extracted may be information that relates to the position of the actuator.

This may allow to determine the exact state in which a coupling mechanism is currently in, thus is the coupling mechanism securely locked (third section), open (first section), over-extended (fourth section) or is it currently in transportation somewhere between open and securely locked (second section).

The information that is extracted may be information that relates to the speed or acceleration at which the actuator is moving.

This may help to assess the health of the pneumatic or hydraulic system and if the pressure in the system needs to be topped up by adding fluid or if other maintenance should be planned.

The invention may also relate to a software or a computer program product, which can be run on a processor or computer, which computer program product is configured to perform any of the described method steps.

### Brief Description of the Drawings

The present invention will now be described, for exemplary purposes, in more detail by way of an embodiment(s) and with reference to the enclosed drawings, in which:
- Fig. 1: schematically illustrates a tool holder according to the invention and a tool adapter of a tool;
- Fig. 2a: schematically illustrates a cross sectional view cut through a tool holder and a part of a tool, illustrating an unlocked coupling;
- Fig. 2b: schematically illustrates a detail of figure 2a of an actuator positioning system relating to the unlocked coupling;
- Fig. 3a: schematically illustrates a cross sectional view cut through the tool holder and the part of the tool, illustrating a faulty coupling;
- Fig. 3b: schematically illustrates a detail of figure 3a of the actuator positioning system relating to the faulty coupling;
- Fig. 4a: schematically illustrates a cross sectional view cut through the tool holder and the part of the tool, illustrating a correct and safe coupling;
- Fig. 4b: schematically illustrates a detail of figure 4a of the actuator positioning system relating to the correct and safe coupling;
- Fig. 5: illustrates an example of an actuator positioning system according to the invention;
- Fig. 6: illustrates an example of a curve provided by the actuator positioning system according to the invention;
- Fig. 7: illustrates a similar view as figure 6 but of another example of a curve provided by the actuator positioning system according to the invention;
- Fig. 8: illustrates a similar view as figures 6 and but still of another example of a curve provided by the actuator positioning system according to the invention; and
- Fig. 9: illustrates a schematic illustration of a method according to the invention.

### Detailed Description

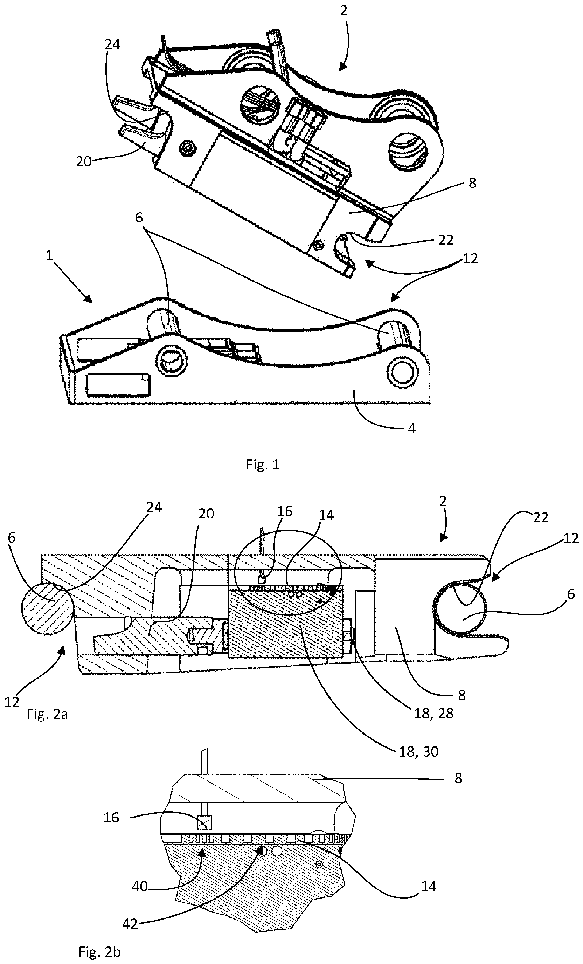

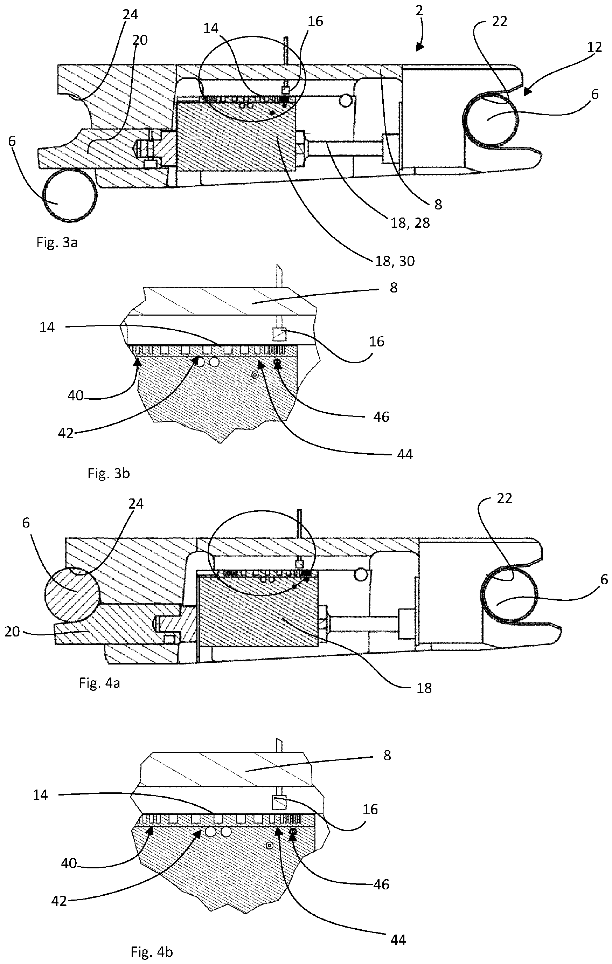

Figure 1 schematically illustrates a tool holder 2 and a tool 1 that can be connected to one another via a coupling system 12. The tool holder 2 is typically coupled to a machine, for example an excavator or forestry machine or the like. The tool 1 or tool adapter 1 in the illustrated example is typically arranged on a tool such as a shovel, forestry tool, cutter, compactor or the like. The tool 1 or tool adapter 1 is designed so that it can be coupled to the tool holder 2 automatically without manual interreference of an operator at the tool 1 or tool holder 2. A frame 8 of the tool holder 2 comprises at least one hook shaped cut out 22 and at least one partial hook shaped cut out 24. At least one actuator 18 is embedded and connected, at least with one side, to the frame 8. The coupling of the tool holder 2 to the tool 1 is established by a coupling mechanism 12 comprising the at least one actuator for example in the form of a hydraulic or pneumatic cylinder 18 (c.f. figures 2 and 3) connected to lock fingers 20 or a lock element and the at least one hook shaped cut out 22 and the at least one partial hook shaped cut out 24 on the tool holder 2 and a pair of bracket pins 6 on the tool 1 or tool adapter 1, said pair of bracket pins 6 being held together by a body 4 of the tool 1 or tool adapter 1. In figure 1 the lock fingers 20 are shown in an at least partially extended state, thus with the at least one actuator 18 at least partially extended. When the tool adapter 1 is connected to the tool holder 2 then the hook shaped cut outs 22 are engaged first in one of the bracket pins 6. As soon as the hook shaped cut outs 22 have securely engaged the tool adapter 1, the tool 1 can be lifted and tilted by the machine via the tool holder 2 so that the at least partially hook shaped cut outs 22 can engage the other of the pair of bracket pins 6, when the lock fingers 20 are retracted and typically due to the tilting movement of the tool due to gravity. Once the other of the pair of bracket pins 6 is engaged in the at least partial hook shaped cut out 20 the lock fingers 20 can be extended so that they lock both bracket pins 6 securely and the tool 1 can be used. The coupling does not necessarily need to be established by lifting the tool 1, tilting it on the ground or just smoothly coupling while the tool is laying on the ground may be enough to connect the pair of bracket pins 6 to the tool holder 2 via the coupling mechanism 12.

During the connection of the tool adapter 1 to the tool holder 2, it is beneficial if the operator can actually see and observe the status of the coupling mechanism 12 so that it can be determined whether or not the tool 1 is securely coupled to the tool holder 2 or if there is a problem. The present invention is directed towards such issues and potential problems concerning the connection of the tool 1 to the tool holder 2. In order to better survey and observe the connection between tool holder 2 and tool 1 embodiments of an actuator positioning system 10 for a machine or a tool holder 2 is herewith described referring to figures 2a to 8.

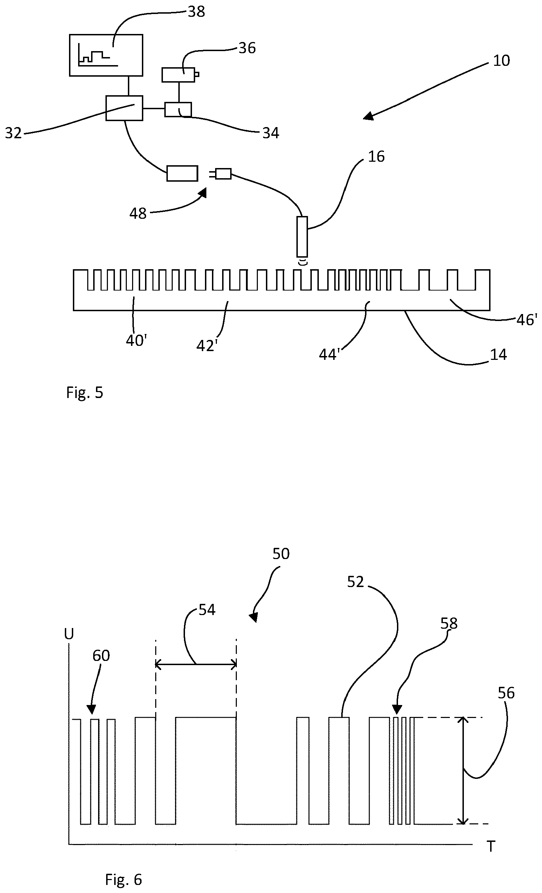

Figure 2a is a cross sectional view of the tool holder 2 and a part of the tool, namely the pair of bracket pins 6 in order to explain the invention in more detail. Figure 2a illustrates how the first bracket pin 6 is snug engaged in the at least one hook shaped cut out 22 and the second bracket pin 6 is snug engaged in the partial hook shaped cut out 24. The at least one actuator 18 is in a fully retracted position so that the lock finger 20 does not engage the second bracket pin 6 in the at least one partial hook shaped cut out 24. The second bracket pin 6 is therewith not securely locked. The piston 28 of the actuator 18 is retracted in the housing 30 of the actuator 18. The at least one actuator 18 is connected to the frame 8 via a free end of the piston 28, in particular a rod of the piston 28, so that the housing 30 is moving in relation to the frame 8 when the actuator is extended and retracted. On the housing 30 a pattern 14 is arranged. The pattern 14 is made of magnetic material or material that can be magnetized. Various such materials exist such as ferromagnetic iron, magnetizable aluminium or alloys, which comprise metals that can be magnetized such as iron (Fe), cobalt (Co), nickel (Ni) or even copper (Cu). Thus, any alloy that is suitable and containing at least one of the named metals (Fe, Ni, Co, Cu) may be used to provide the pattern 14. On top of the pattern 14 an sweep sensor 16 is arranged that can sense the pattern 14. The sweep sensor 16 is connected to a processor 32, a memory 34, for example a non-transitory memory, such as computer-readable media (CRM) that stores data for short periods or in the presence of power such as a memory device or Random Access Memory (RAM), a power source 36 and a display or the like 38 to display information, as shown in figure 5, which figure 5 illustrates an actuator positioning system 10. Referring back to figure 2a the sweep sensor 16 is designed to sense the shape of the pattern 14 in order to determine the exact position of the actuator 18 in particular the actuator housing 30 and the lock finger(s) 22. Figure 2b illustrates the lock finger 20 and therewith the coupling mechanism 12 in the open and not secure position where the second bracket pin 6 is not secured in the hook shaped cut out 24.

Figure 2b visualizes an enlargement of the area around the metallic pattern 14 and the sweep sensor 16 arranged on the actuator housing 30 of figure 2a, indicated by an elliptic circumference. The sweep sensor 16 is embedded in the frame 8 of the tool holder 2. sweep sensorThe sweep sensor 16 may be arranged perpendicular or parallel to a plane defined by the pattern 14. From figure 2b it also becomes clear how the sweep sensor 16 together with the processor 32, power source 36 and memory 34, thus with a computer, can determine the position of the lock element 20 or lock finger 20. In figure 2b a first section 40 of the metallic pattern 14 is arranged under or within vicinity of the sweep sensor 16. The first section 40 of the metallic pattern 14 comprises four (4) vertically cut indentations or pole shaped cut outs which are comparably thin in width as compared to a second section 42 of the metallic pattern 14, which second section comprises five (5) rectangular cut-outs spaced apart wider than the pole shaped cut outs of the first section 40. The rectangular cut outs of the second section 42 are also wider than the pole shaped cut outs of the first section 40. The sweep sensor 16 thus knows that the lock finger 20 is not yet extended since it can detect the first section 40 of the metallic pattern 14. This may be shown to an operator of a machine via the display 38. The state of the coupling mechanism 12 shown in figures 2a and 2b is determined as not safe since the tool can fall from the machine as it is not locked safely. The pattern 14 illustrated in figure 2b (and 3b, 4b) is only exemplary and the skilled person understands that many different patterns may be used and employed.

Figures 3a and 3b illustrate a similar view as figures 2a and 2b with same reference numbers being used for the same components.

Figure 3a further illustrates how the piston 28 of the actuator 18 is fully extended with a rod of the piston 28 well visible. The housing 30 of the actuator 18 and the lock finger(s) 20 are therewith pushed towards the at least one partial hook shaped cut out 24. Figure 3a illustrates an unsafe state of the coupling mechanism 12, where the second bracket pin 6, which is supposed to engage the at least one partial hook shaped cut out 24 is not arranged snug in the partial hook shaped cut out 24 but rather arranged below the frame 8 of the tool holder 2. This can potentially be a very dangerous situation as the operator can normally not see the rear or second bracket pin 6. Since the lock element 20 or lock finger 20 is actually in the extended position and therewith theoretically securely locking the second bracket pin 6 in the partial hook shaped cut out 24 this state is rather dangerous as the operator may wrongly conclude that the second bracket pin 6 is properly secured in the tool holder 2. Using the actuator positioning system 10 and in particular the sweep sensor 16 and the metallic pattern 14, prevents this potentially dangerous assumption from happening, since it is possible to detect that the lock element 20 is in an over-extended position and that the second bracket pin 6 can therewith not be embedded snug in the partial hook shaped cut out 24. This may easily be detected using the sweep sensor 16 and the pattern 14 as shown in figure 3b.

Figure 3b illustrates an enlargement of figure 3a, indicated by the elliptic circumference. Figure 3a illustrates fourth section 46 of the metallic pattern 14 is arranged under the sweep sensor 16 or in close vicinity of it. The fourth section 46 is designed similar to the first pattern 40 with rather slim pole shaped cut outs, the pole shaped cut outs of the fourth section 46 are however slimmer and closer together as the one from the first section 40. The metallic pattern 14 further comprise a third section 44 which third section 44 comprises basically a wider rectangular cut-out and a slimmer pole-shaped cut out. All four sections 40, 42, 44, 46 of the metallic pattern 14 are different and distinguishable from one another so that any relevant position of the actuator 18, the actuator housing 30 and therewith the lock element 20 (c.f. figure 3a) can be detected. The fourth section 46 and the corresponding signal path or signal curve (c.f. figures 6 to 8) makes it possible to detect and clearly distinguish the exact actuator position and the determine that the lock finger 20 is in an over-extended position and that the second bracket pin 6 is therewith not securely locked in the partial hook shaped cut out 24. This can be indicated to the machine operator via a warning, for example via the display 38 (c.f. figure 5) or by blocking the controls of the machine, once the pattern 14 is calibrated on the size of the tool holder 2.

Figures 4a illustrates the coupling mechanism 12 in the properly secured state where the first bracket pin 6 is snug arranged in the hook shaped cut out 22 and the second bracket pin is snug arranged in the partial hook shaped cut out 24 and the lock fingers 20 is properly engaging and therewith locking the second bracket pin 6. The actuator 18 is in an extended position but not over-extended as in figure 3a.

Figure 4b illustrates enlargement of figure 4a, indicated by the elliptic circumference. Figure 4a shows the third section 44 of the metallic pattern 14 is positioned under the sweep sensor 16. As explained above the third section 44 comprises a wider rectangular cut-out and a slimmer pole-shaped cut out directly next to one another. This specific design of the third section 44 lets the sweep sensor 16 and a connected processor 32 to detect the closed and locked position of the lock element 20. This is a safe state and the machine and tool may now be used, which can be signalled to the operator for example via the display 38.

Any of the described sections 40, 42, 44, 46 may be removed from the pattern 14 as illustrated in figures 2b, 3b, 4b. For example the fourth section 46 relating to the over-extended lock finger 20 and therewith an over extended state of the coupling mechanism 12 may be removed in another embodiment.

The metallic pattern 14 may be a ferromagnetic pattern 14.

It possible to provide a metallic pattern (not shown) with more or less than four (4) sections, whereby each section is distinguishable from the other sections. The number of sections depends on the use case and system requirements, such as number of actuator positions that need to be detected and how sensitive the actuator positioning system needs to be. The sections 40, 42, 44, 46 illustrated in figures 2a to 4b are rather basic. Other sections and therewith other metallic patterns may of course be used. Such other patterns may for example comprise curved surfaces, inclined surfaces and even different heights.

Referring back to figures 2a to 4b it is to be noted that term "under" refers to the are directly under the sweep sensor 16. The sweep sensor 16 is designed to measure at least more less perpendicular to a surface of the housing 30. It may however be inclined to the surface of the housing 30 as long it can follow and therewith detect and observe the metallic pattern 14 in order to provide positioning information of the actuator 18.

Figure 5 illustrates the actuator positioning system 10 according to the invention. The actuator positioning system 10 comprises the processor 32, the energy source 36, the memory 34, the display, the sweep sensor 16 and the pattern 14. The sweep sensor 16 and the pattern 14 are arranged on the tool holder (not shown in figure 5) and the sweep sensor 16 may be releasably connected to the processor 32 or computer, as indicated by the plugs and socket 48 during coupling and decoupling of the tool holder to the machine. The computer, thus the processor 32, the memory 34, the energy source 36 and the display 38 may be part of the machine or they may be integrated in the tool holder 2. It is even possible to send the signal from the sweep sensor 14 in a wireless manner to the processor or computer. In such a case the computer may be arranged at any suitable position, for example in the cabin of the machine or at a central control centre. At least the display 38 is typically arranged in a cabin of the machine so that the operator can get information. The pattern 14 illustrated in figure 5 comprises four (4) sections 40', 42', 44' and 46', which are slightly different from the sections explained referring to figures 2a to 4b.

The length of the pattern 14 may correspond at least to a stroke length of the actuator 18 so that the sweep sensor 16 can detect the pattern 14 along the entire stroke length of the actuator 18.

Turning now to figures 6 to 8, which show various curve shapes that can be provided via the computer, thus the processor 32 and memory 34, using information provided by the sweep sensor 14 and the pattern 16.

Figure 6 illustrates a classical pulse curve 50 generated via the sweep sensor 16 and the pattern 14 in the housing 30 as explained referring to figures 2a to 5. The classical pulse curve 50 may be analysed and interpreted by a computer, such as the memory 34, the processor 32 and the energy source 36 illustrated in figure 5. The y-axis illustrates the Amplitude U and the x-axis illustrates the time T. The Amplitude U is typically given in voltage while the time T is typically given in seconds. Other dimensions than voltage and seconds may however be used. The classical pulse curve 50 allows to determine the exact position of the actuator 18 by analysing the pulses 52 and the periods 54 of the curve 50. The curve 50 illustrated in figure 6 also shows the actual amplitude 56 of the curve 50. The amplitude 56 may be directly proportional to the depth of the pattern 14 shown in figures 2a to 5 or it may be amplified or modified. In addition, figure 6 illustrates a first part 58 of the curve that may for example correspond to the fourth section 46 as illustrated in figures 2b, 3b and 4b while a second part 60 of the curve may correspond to the first section 40. In view of that the computer may now conclude that the actuator 18 is a fully retracted state since the curve 50 went from the fourth section 46, corresponding to the first part 58 (lock finger 20 in locked and secure position), to the first section 40 corresponding to the second part 60 (lock finger 20 in retracted and open position). It becomes therewith clear that the curve 50 allows to detect the exact position of the lock finger 20 and therewith the actuator at any point in time, no matter whether the actuator 18 is moving or in an idle position. Having an irregular pattern 14 with several different sections 40, 42, 44, 46 allows to determine very quickly and efficiently at which position the actuator 18 is at even after a current power loss or during rebooting or restarting of the machine.

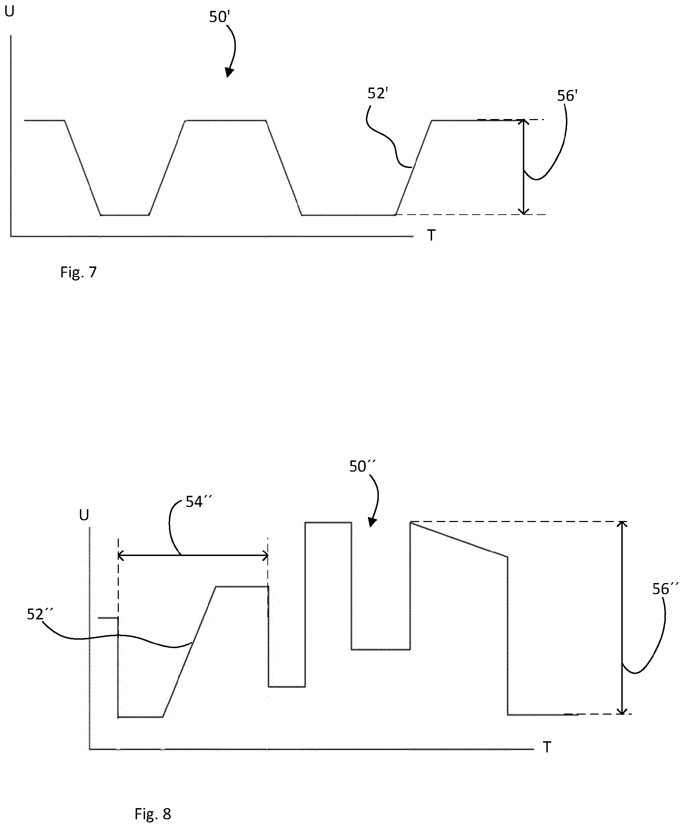

Figure 7 illustrates another curve 50' with inclined or sloped pulses 52' that also have one and the same amplitude 56' like the amplitude 56 of figure 6. The inclined pulses may be amplified or generated based on time and speed of movement, thus digitalized, or they may be generated directly by designing the pattern 14 accordingly with inclined surfaces.

Figure 8 illustrates another example of a curve 50" showing a combination of the curves 50, 50' illustrated in figures 6 and 7, with varying amplitudes 56" and included surfaces 52". This curve may be obtained digitally using an algorithm based on signals provided by the sweep sensor 16 or it may be directly obtained from the pattern 14.

In addition to the curves 50, 50', 50" shown in figures 6 to 8 it is also possible to obtain curves that comprise sinus shaped elements alone or in combination with parts of the curves 50, 50', 50" as illustrated. The skilled person understands that digital tools and physical pattern generating technologies such as lasering, sputtering, milling, 3D printing and so on allow to generate a variety of suitable and useful patterns on the housing 30 of the actuator 18 or the actuator 18.

The actuator 18 may be a hydraulic or pneumatic cylinder comprising at least two hydraulic or pneumatic cylinders with a H-shaped housing (not shown) whereby each leg of the H-shape comprises one cylinder. The free ends of the cylinder may thereby be connected to the frame of the tool holder.

As previously indicated the pattern may be directly produced on or in the housing 30 of the actuator 18 for example by lasering, sputtering, milling, 3D printing or any similar method.

Alternatively, a strip of material that is treated according to any of the above-described methods and comprises the pattern 14, may be glued, bolted, screwed, clamped or welded onto the housing 30 of the actuator 18. A releasable connection of the pattern 14 to the housing 30, such as screwing or clamping, may be desirable so that the pattern 14 can actually be replaced in case the use-case changes or in change another pattern 14 need to be used.

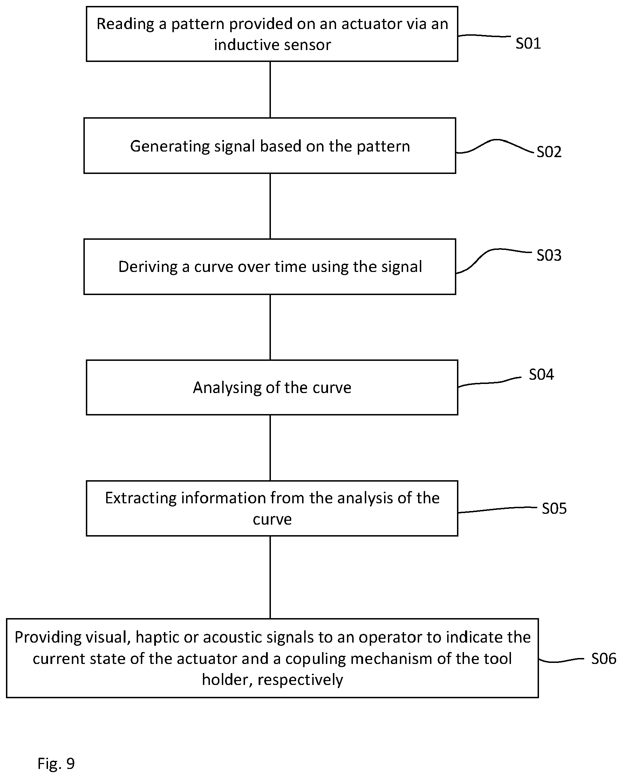

Figure 9 illustrates a method for extracting information relating to the state of an actuator 18 and a coupling mechanism 12, respectively, in a tool holder 2. The method comprises the steps of:
- Reading S01 a pattern provided on an actuator 18, for example an actuator housing 30, via a sweep sensor 16;
- Generating S02 a signal based on the pattern using the sweep sensor 16;
- Deriving S03 a curve 50, 50', 50" over time using the signal;
- Analysing S04 the curve 50, 50', 50";
- Extracting information from the analysis of the curve 50, 50', 50"; and
- Providing visual, haptic or acoustic signals to an operator to indicate the current state of the actuator 18 and a coupling mechanism 12 of the tool holder 2, respectively.

In light of the above the above method certain modifications and/or special aspects are herewith described: The information that can be extracted from the curve 50, 50', 50" or the actual signal may be positioning information, as described above. The information may however also be information related to the speed of movement of the actuator thus, how quick the actuator 18 moving between the various positions. This may allow to draw conclusions regarding hydraulic or pneumatic pressure in the hydraulic or pneumatic system and if fluid or hydraulic fluid needs to be added to the system. Further, the generation of the curve may be avoided if the signal can be compared to previous values and a stored database. This alone may be enough to extract positioning information from the signal.

The signal or surface may be continuously read or swept SO1 by the sweep sensor.

Reading the signal over time may mean that a measurement is performed by the sweep sensor 16 at regular time intervals. The intervals may be chosen to be rather small time periods and preferably in the millisecond range or shorter, in particular towards the end positions, coupling mechanism 12 open and coupling mechanism 12 securely closed,

The invention has now been described referring to several embodiments. The skilled person understands that certain modifications starting from the invention are possible, in particular different pattern designs and providing a redundancy actuator positioning system for safety reasons. Other modifications may also be possible and fall under the scope of the invention.

## Claims

1. A tool holder (2) for a machine comprising
- a frame (8) comprising at least one hook-shaped cut-out (22) for receiving a first bracket pin (6) of a tool (1) and a least one partial cut-out (24) for receiving a second bracket pin (6) of the tool (1);
- an actuator (18) connected with one end to the frame (8), said actuator (18) comprising an actuator housing (30) arranged movable compared to the frame (8) upon activation of said actuator (18), the actuator housing (30) further comprising lock fingers (20) that are designed to change the shape of the at least one partial cut-out (24) so that second bracket pin (6) of the tool (1) can be locked in the tool holder and the at least one partial cut out (24), respectively;
- an actuator positioning system (10) comprising a pattern (14) made of a magnetizable material, an sweep sensor (16), a processor (32) and a computer readable memory (34), wherein
the sweep sensor (16) is arranged on the frame (8) and the pattern (14) is arranged on the actuator housing (30), whereby the pattern (14) is designed so that the sweep sensor (16) can detect the pattern (14) and generate a corresponding signal, which can be analysed using the processor (32) and the computer readable memory (34) for providing information relating to the actuator (18).

2. The tool holder according to claim 1, wherein the sweep sensor (16) is an infrared sensor, a capacitive sensor or a resistive sensor comprising an arm that follows the pattern.

3. The tool holder according to claim 1, wherein the sweep sensor (16) is an inductive sensor and wherein the pattern is made of magnetizable material.

4. The tool holder according to any of the previous claims, wherein the information is information relating to a current position of the actuator (18).

5. The tool holder according to any of the previous claims, wherein relates to the speed or acceleration at which the actuator (18) is moving.

6. The tool holder for a machine according to any of the previous claims, wherein a length of the pattern (14) corresponds at least to a stroke length of the actuator (18) so that the sweep sensor (16) can detect the pattern (14) along the entire stroke length of the actuator (18).

7. The tool holder for a machine according to any of the previous claims, wherein pattern (14) is an irregular pattern.

8. The tool holder for a machine according to claim 7, wherein the irregular pattern (14) comprises at least three sections (40, 40', 42, 42', 44, 44'), whereby each section (40, 40', 42, 42', 44, 44') is different from - and unique to the other sections (40, 40', 42, 42', 44, 44').

9. The tool holder for a machine according to claim 8, wherein the irregular pattern (14) comprises at least four sections (40, 40', 42, 42', 44, 44', 46, 46'), whereby each section (40, 40', 42, 42', 44, 44', 46, 46') is different from - and unique to the other sections (40, 40', 42, 42', 44, 44', 46, 46').

10. The tool holder for a machine according to any of the previous claims, wherein the pattern (14) is produced by lasering, sputtering, milling, etching or 3D printing into or on a strip of magnetizable material and wherein the strip is fixedly connected to the actuator housing (30).

11. The tool holder for a machine according to any of the previous claims, wherein the actuator housing (18) is made of magnetizable material and wherein the pattern (14) is lasered, sputtered, milled, etched or 3D printed directly into or on to the actuator housing (30).

12. The tool holder for a machine according to any of the previous claims, wherein the actuator (18) comprises at least one hydraulic cylinder or pneumatic cylinder.

13. A method for extracting information relating to the state of an actuator (18) and a coupling mechanism (12), respectively, in a tool holder (2), the method comprising the steps of:
- Sweeping (S01) a pattern (14) provided on an actuator (18) via a sweep sensor (16);
- Generating (S02) a signal based on the pattern (14) using the sweep sensor (16);
- Deriving (S03) a curve (50, 50', 50") over time using the signal;
- Analysing (S04) the curve (50, 50', 50");
- Extracting (S05) information from the analysis of the curve (50, 50', 50"); and
- Providing (S06) visual, haptic or acoustic signals to an operator to indicate the current state of the actuator (18) of the tool holder (2).

14. The method according to claim 13, wherein the information that is extracted is information that relates to the position of the actuator (18).

15. The method according to claim 13 or 14, wherein the information that is extracted is information that relates to the speed or acceleration at which the actuator (18) is moving.

16. A computer program product that is configured perform any of the method steps according to claims 13 to 15, when the computer program product is run on a computer.
